# EUROPÄISCHE PATENTSCHRIFT

(11) **EP 2 875 472 B1**
(45) Veröffentlichungstag und Bekanntmachung des Hinweises auf die Patenterteilung: **30.10.2019**
(21) Anmeldenummer: 13742590.6
(22) Anmeldetag: 22.07.2013
(51) Int. Cl.: G06K 19/16, G06K 19/07, G06K 19/077, H01Q 1/12, B60R 13/10, H01Q 1/22, H01Q 1/32, H01Q 1/38

(54) **FAHRZEUGIDENTIFIKATIONSMITTEL**
VEHICLE IDENTIFICATION MEANS
MOYEN D'IDENTIFICATION DE VÉHICULE

(30) Priorität: 20.07.2012 DE 102012106594
(43) Veröffentlichungstag der Anmeldung: 27.05.2015
(73) Patentinhaber: Tönnjes ISI Patent Holding GmbH, 27751 Delmenhorst (DE)
(72) Erfinder: BEENKEN, Björn, 27777 Ganderkesee (DE)
(74) Vertreter: Möller, Friedrich
(86) Internationale Anmeldenummer: PCT/EP2013/002161
(87) Internationale Veröffentlichungsnummer: WO 2014/012676

(56) Entgegenhaltungen:
- EP-A1- 1 179 811
- WO-A1-2004/015625
- DE-A1-102009 033 559
- JP-A- 2002 042 088

## Beschreibung

Die Erfindung betrifft ein Fahrzeugidentifikationsmittel gemäß dem Oberbegriff des Anspruchs 1.

Die hier beschriebenen Fahrzeugidentifikationsmittel dienen der Identifizierung von Fahrzeugen mittels einer insbesondere eindeutigen Kennzeichnung. Diese Kennzeichnung beinhaltet vorzugsweise eine Zahlen- und/oder Nummernkombination oder auch andere eindeutig zuzuordnende Daten. Zur eindeutigen Zuordnung zu einem Fahrzeug ist das Fahrzeugidentifikationsmittel beispielsweise an einem sogenannten Nummernschild vorne und/oder hinten an der Karosserie oder der Stoßstange eines Fahrzeugs befestigt. Alternativ oder ergänzend kann das Fahrzeugidentifikationsmittel beispielsweise auch an einer (Fenster-)Scheibe wie insbesondere einer Windschutzscheibe angebracht beziehungsweise angeklebt sein. Es kann entsprechend als sogenanntes Zusatzkennzeichen oder "drittes Kennzeichen" dienen.

Die vorstehend beschriebenen Fahrzeugidentifikationsmittel werden häufig gefälscht oder unberechtigterweise für andere Fahrzeuge verwendet, denen sie nicht zugeordnet sind. Dies lässt sich beispielsweise durch Verwendung von Fahrzeugidentifikationsmitteln verhindern oder zumindest nachweisen, wenn diese einen berührungslos auslesbaren Datenträger aufweisen. Auf dem Datenträger sind dazu Daten des Fahrzeugs gespeichert, zu dem das Identifikationsmittel gehört. Außerdem ist häufig noch die Buchstaben- und Zahlenkombination des eigentlichen Kennzeichens beziehungsweise wenigstens ein anderer eindeutiger Identifizierungscode im Datenträger gespeichert.

Das Auslesen des Datenträgers wird üblicherweise mittels eines externen Lesegerätes vorgenommen. Durch einen Vergleich der ausgelesenen Daten mit denjenigen des Fahrzeugs, an dem der Datenträger befestigt ist, können Rückschlüsse auf eventuelle Manipulationen gezogen werden. Insbesondere lässt sich damit feststellen, ob das Identifikationsmittel dem richtigen oder einem fremden Fahrzeug zugeordnet ist.

Bisher bekannte, als Fahrzeugidentifikationsmittel basieren üblicherweise auf einer insbesondere zumindest teilweise elektrisch leitfähigen Folie, wie beispielsweise in DE 10 2009 033 559 A1 beschrieben. Zum Schutz vor Manipulationen können diese, wie beispielsweise in JP 2002 042088 A angedeutet, zusätzlich mit einem Hologramm ausgestattet sein, das insbesondere beim Ablösen zerstört wird. Alternativ oder zusätzlich kann die Folie als Reflexfolie ausgebildet sein. Eine solche Licht reflektierende (Reflex-)Folie dient zur besseren Sichtbarmachung einer in der Regel nicht reflektierenden aufgebrachten Kennzeichenbeschriftung, insbesondere bei künstlicher Beleuchtung bei Dunkelheit. Außerdem kann ein Datenträger vorgesehen sein, der zum Auslesen eine separate Antenne benötigt. Solche Fahrzeugidentifikationsmittel sind insbesondere aufgrund der Vielzahl unterschiedlicher Komponenten entsprechend aufwendig herzustellen und störanfällig in der Handhabung.

Der Erfindung liegt die Aufgabe zugrunde, ein verbessertes Fahrzeugidentifikationsmittel zu schaffen, das einen möglichst einfachen Aufbau aufweist und vorzugsweise weniger störanfällig ist.

Ein Fahrzeugidentifikationsmittel zur Lösung dieser Aufgabe weist die Merkmale des Anspruchs 1 auf. Bei diesem Identifikationsmittel ist das Hologramm als Antenne für den Datenträger ausgebildet.. Der Kern der Erfindung ist darin zu sehen, dass die Folie als selbstklebende Folie ausgebildet ist, und dass die Antenne für den Datenträger als eine Aussparung in dem Hologramm und/oder der Reflexfolie der selbstklebenden Folie ausgebildet ist, wobei der Datenträger auf das Hologramm und/oder die Reflexfolie geklebt ist und eine Spule aufweist mit welcher der Datenträger induktiv und/oder kapazitiv an die Schlitzantenne koppelbar ist Dementsprechend ist es nicht erforderlich, eine Antenne als separates Bauteil vorzusehen. Der Aufbau des Fahrzeugidentifikationsmittels ist damit insgesamt einfacher und auch störungsunanfälliger. Die Folie des Fahrzeugidentifikationsmittels ist zumindest teilweise elektrisch leitfähig. Vorzugsweise ist das Hologramm zumindest teilweise in den leitfähigen Bereichen der Folie ausgebildet. Vorzugsweise bedeckt es zumindest nahezu die gesamte Folienfläche, insbesondere abgesehen von den weiter unten beschriebenen eventuellen Aussparungen. Es handelt sich insbesondere um ein reflektierendes Hologramm. Damit kann ein störungsfreier Betrieb des Fahrzeugidentifikationsmittels sichergestellt werden. Insbesondere ist ein Auslesen mittels des Hologramms als Antenne möglich.

Vorzugsweise ist der Datenträger in mehreren Frequenzbereichen unabhängig voneinander auslesbar. Es kann einer oder es können mehrere Datenträger vorgesehen sein. Die Datenträger sind vorzugsweise in denselben und/oder verschiedenen Frequenzbereichen auslesbar, insbesondere unabhängig voneinander. Dies bedeutet, dass bei einem Auslesen in einem Frequenzbereich ein Auslesen in einem anderen Frequenzbereich nicht bzw. nur mit reduzierter Leistung erfolgt.

Bei einem Ausführungsbeispiel eines Identifikationsmittels weist selbiges für jeden Frequenzbereich eine Antenne zum separaten Auslesen des wenigstens einen Datenträgers auf. Das Fahrzeugidentifikationsmittel umfasst insbesondere eine zumindest teilweise elektrisch leitfähige Folie und wenigstens einen berührungslos auslesbaren Datenträger, der in mehreren Frequenzbereichen unabhängig voneinander auslesbar ist. Die Folie dient zumindest teilweise als Antenne für den wenigstens einen Datenträger. Wenn für
jeden der Frequenzbereiche eine eigene Antenne vorgesehen ist, kann eine separate Optimierung jeder einzelne Antenne für den jeweiligen Frequenzbereich beziehungsweise Einsatzzweck vorgenommen werden. So kann ein separates beziehungsweise unabhängiges Auslesen in unterschiedlichen Frequenzbereichen erfolgen. Insbesondere wird damit eine gegenseitige Störung deutlich herabgesetzt oder sogar ganz vermieden. Ein Auslesen in separaten Frequenzbereichen kann sich auf einen einzelnen Datenträger beziehen, der gleichzeitig in mehreren Frequenzbereichen auslesbar ist. Dazu können vorzugsweise mehrere unabhängige Antennen vorgesehen sein. Alternativ können auch separate Datenträger vorgesehen sein, die dann vorzugsweise jeweils mindestens einer separaten Antenne zugeordnet sind. Die Antennen sind bevorzugt jeweils auf den zugehörigen Frequenzbereich optimiert ausgebildet. Somit kann eine optimale Reichweite und Störungsunanfälligkeit erreicht werden.

Weiter ist die Folie zumindest teilweise als reflektives Hologramm ausgebildet. Mit Hilfe eines solchen Hologramms wird die Fälschungssicherheit im Hinblick auf eine visuelle Kontrolle der Echtheit des Fahrzeugkennzeichens verbessert. Das Hologramm ist dabei als Antenne für den Datenträger ausgebildet. Durch Verwendung des Hologramms als Antenne ist es nicht erforderlich, eine separate Antenne vorzusehen. Damit wird die Störungsanfälligkeit reduziert und die Herstellung des Fahrzeugkennzeichens vereinfacht. Weiter ist die Folie als selbstklebende Folie ausgebildet. Bei der Folie handelt es sich um eine Reflexfolie, also eine Licht reflektierende Folie. Auch die Reflexfolie kann als Antenne ausgebildet sein. Insbesondere ist die Folie bzw. das Hologramm als sogenanntes Prägehologramm ausgebildet. Dies bedeutet, dass in die Folie bzw. das Hologramm Vertiefungen eingeprägt sind. Diese Vertiefungen oder Hologrammsymbole sorgen für einen holographischen, dreidimensionalen Effekt. Demgemäß werden entsprechende farblich schillernde Elemente sichtbar, die sich bei Bewegen des Beobachters relativ zum Hologramm zumindest farblich verändern. Alternativen sind Regenbogenhologramme und/oder andere Dünnschichthologramme.

Die Merkmale der vorstehend beschriebenen Erfindungsgegenstände sind gegebenenfalls auch miteinander kombinierbar. Die folgenden Ausführungen beziehen sich außerdem aber explizit auf alle erfindungsgemäßen Fahrzeugidentifikationsmittel:
Ein häufig verwendeter Frequenzbereich ist beispielsweise der Hochfrequenzbereich (HF) beziehungsweise Kurzwellenbereich von etwa 3 MHz bis 30 MHz. Hier findet ein Auslesen im Nahfeldbereich statt, also in einer Entfernung von einigen bis zu einigen zehn Zentimetern. Ein weiterer verbreiteter Frequenzbereich ist derjenige der Ultrahochfrequenz (UHF), auch Dezimeterwellen oder Mikrowellen genannt, mit typischerweise 0,3 GHz bis 3 GHz. Ein Auslesen erfolgt hier typischerweise in einem Abstand von mehreren Metern bis hin zu wenigen zehn Metern, kann aber auch in kleinerer Distanz erfolgen. Besonders bevorzugt stört ein Auslesen eines Frequenzbereichs nicht ein Auslesen eines anderen Frequenzbereichs. Damit können verschiedene Daten eines oder unterschiedlicher Datenträger in mehreren Frequenzbereichen unabhängig voneinander ausgelesen werden. Dies gilt besonders, wenn mehrere separate Datenträger vorgesehen sind, die vorzugsweise in unterschiedlichen Frequenzbereichen arbeiten. Besonders bevorzugt ist für jeden der Frequenzbereiche eine eigene Antenne beziehungsweise Antennenstruktur ausgebildet und/oder optimiert zum separaten Auslesen. Durch Vorsehen einer separaten Antenne wird eine Trennung der Frequenzbereiche und insbesondere ein separates Auslesen ermöglicht oder zumindest verbessert.

Besonders bevorzugt ist die Folie mit einer Beschichtung, insbesondere Bedampfung ausgestattet. Die Beschichtung ist metallisch und elektrisch leitfähig. Dies erfolgt bevorzugt zur Erzeugung der Leitfähigkeit. Das Vorsehen einer reflektierenden, insbesondere metallischen Beschichtung kann aber gegebenenfalls auch zur Erzeugung eines Hologramms notwendig sein, sofern es sich um ein entsprechendes reflektives beziehungsweise reflektierendes Hologramm handelt. Dann dient die metallische Schicht gleichzeitig als elektrischer Leiter und als Reflektorfläche für Licht.

Besonders bevorzugt weist die Folie die Bereiche auf, in denen die elektrische Leitfähigkeit herabgesetzt und/oder unterbrochen ist. Damit ist wenigstens eine Antennenstruktur für die Antenne ausgebildet. Es handelt sich dabei um eine flache und flexible Antennenform in Form einer Folie. Eine solche Schlitzantenne arbeitet ähnlich, aber praktisch invers zu einer klassischen Dipolantenne. Die elektrischen und magnetischen Feldkomponenten sind vertauscht. Im vorliegenden Fall kann durch Aussparung eines kleinen Bereichs in der Folie vorzugsweise in Form eines Schlitzes eine Schlitzantenne geschaffen werden. Damit bleibt der wesentliche visuelle Effekt des flächigen Hologramms bestehen. Lediglich ein vergleichsweise kleiner Schlitz im Hologramm muss vorgesehen sein. Hier lässt sich vorzugsweise zumindest nahezu die gesamte Fläche des Hologramms gleichzeitig als Antenne nutzen. Bei einer üblichen Dipolantenne würde nur eine kleine Fläche beschichtbar beziehungsweise elektrisch leitfähig und damit auch als Hologramm nutzbar. Alternativ oder zusätzlich kann wenigstens eine Leiterschleife, Windung und/oder Spule (loop), beziehungsweise wenigstens ein Streifen, eine Platte und/oder Fahne beziehungsweise Metallflügelchen (strap) vorgesehen sein. Diese können zur Kontaktierung der Antenne und/oder Einkopplung in die Antenne beziehungsweise insbesondere als Antenne dienen.

Weiter bevorzugt ist eine Antenne in einer Aussparung einer anderen Antenne ausgebildet. Dies ist beispielsweise dadurch realisiert, dass eine große Fläche des Hologramms als erste Antenne als umgebende Antenne ausgebildet ist, vorzugsweise für UHF. Es kann dann eine Aussparung vorgesehen sein, in der eine vergleichsweise flächenmäßig kleinere Antenne ausgebildet ist, insbesondere aus demselben Material wie die umgebende Antenne. Typischerweise ist diese eingesetzte Antenne für einen anderen Frequenzbereich als die umgebende Antenne vorgesehen, insbesondere für HF. Eine solche eingesetzte Antenne weist beispielsweise die Form wenigstens einer Spirale, einer Spule, einer Leiterschleife (loop), eines Streifens, einer Platte, einer Fahne, eines Metallflügelchens (strap) und/oder ähnlichem auf. Um eine optimale Sende- und Empfangsleistung zu haben, sind die Antennen für den jeweiligen Frequenzbereich optimiert. Eine flächenmäßig kleinere Antenne wird dabei üblicherweise für höhere Frequenzen vorgesehen sein. Damit kann auch das Hologramm als Antenne für den Datenträger dienen. Bevorzugt ist eine Antennenstruktur in dem Hologramm ausgeformt.

Der Datenträger ist elektrisch mit der Antenne bzw. der elektrisch leitfähigen Schicht, insbesondere dem Hologramm und/oder der Reflexfolie verbunden. Die elektrische Verbindung erfolgt auf galvanischem und/oder kapazitivem und/oder induktivem Wege. Dementsprechend ist eine direkte elektrische Verbindung und/oder eine kapazitive Einkopplung und/oder eine induktive Einkopplung insbesondere mittels einer Spule vorgesehen. Eine elektrisch leitfähige Kontaktierung kann beispielsweise mit Hilfe eines Lots beziehungsweise Lötzinns oder einer anderen dauerhaften und leitfähigen Verbindungsart hergestellt werden. Es ist ein Kleber vorgesehen, der zum Fixieren des Datenträgers dient. Zusätzlich kann der Kleber beispielsweise bei Druckbeanspruchung oder nach einem Erhitzen eine Leitfähigkeit ausbilden. Hierzu können in den Kleber leitfähige Partikel eingebettet sein, die bei Druckbeaufschlagung zusammengepresst werden und somit eine leitfähige Verbindung ausbilden. Alternativ kann durch Erhitzen ein Zusammenschmelzen bzw. eine Agglomeration von Partikeln erfolgen, so dass ebenfalls eine leitfähige Verbindung hergestellt ist. Eine kapazitive oder induktive Einkopplung erfolgt typischerweise mit Hilfe einer Spule, anderer geeigneter Leiterbahnen beziehungsweise einer entsprechenden Antennenstruktur.

Vorzugsweise ist wenigstens eine der Antennen als Nahfeldantenne ausgebildet. Der Frequenzbereich des Nahfeldes liegt insbesondere im HF. Wenigstens eine der Antennen ist bevorzugt als Fernfeldantenne ausgebildet. Deren Frequenzbereich liegt bevorzugt im UHF. Insbesondere sind separate Strukturen für jede Antenne vorgesehen. Je nach Frequenzbereich ergeben sich unterschiedliche Einsatzgebiete der einzelnen Antennen bzw. Antennenstrukturen. Eine Nahfeldantenne kann beispielsweise erst durch nahes Heranbringen eines externen Lesegeräts bis auf wenige Zentimeter bis Dezimeter ausgelesen werden. Der entsprechende Frequenzbereich liegt üblicherweise im HF (High Frequency) Bereich. Dies kann beispielsweise mit Hilfe eines entsprechend vorbereiteten Mobiltelefons erfolgen, das entsprechend eine Kommunikationseinheit für das Nahfeld (Near Field Communications, NFC) aufweist. Ein Auslesen im Fernfeld erfolgt typischerweise mit entsprechenden stationären Sendern. Damit kann ein Auslesen über eine Entfernung von einigen Metern bis zu einigen zehn Metern erfolgen, auch bei einer Relativbewegung von Fahrzeugidentifikationsmittel und Lesegerät. Dies ist beispielsweise bei fahrenden Fahrzeugen der Fall, die mit stationären Auslesegeräten ausgelesen werden.

Die Folie des Fahrzeugkennzeichens weist vorzugsweise auf wenigstens einer Seite eine Klebeschicht auf. Mit Hilfe dieser Klebeschicht kann das Fahrzeugkennzeichen vorzugsweise dauerhaft an einem Fahrzeug befestigt werden, insbesondere an einer Scheibe, vorzugsweise Windschutzscheibe. Die Klebeschicht ist bevorzugt auf Seite der reflektierenden bzw. der elektrisch leitfähigen Beschichtung aufgebracht. Damit ist die reflektierende Schicht bzw. die leitfähige Beschichtung dem Fahrzeugteil zugewandt aufgeklebt. Somit wird gleichzeitig für einen mechanischen Schutz der Beschichtung gesorgt. Die Klebeschicht kann nach dem Aufbringen aushärten durch einen separaten Härtungsprozess, insbesondere mittels künstlichem ultravioletten (UV) Lichts, oder beispielsweise auch durch eine Einstrahlung von Sonnenlicht insbesondere als natürlichem UV-Licht. Der Kleber kann auf verschiedene Arten aushärten. Das kann beispielsweise durch Temperatur, durch Strahlungswirkung oder ähnliches geschehen. Insbesondere kann eine Aushärtung durch UV-Licht erfolgen, wie beispielsweise durch eine UV-Lampe oder auch das Sonnenlicht.

Weiter bevorzugt weist die Folie wenigstens eine Klebeschicht zum vorzugsweise dauerhaften Aufeinanderkleben wenigstens zweier Lagen der Folie auf. Dazu ist die Folie insbesondere an einer vorherbestimmten Knickstelle zusammenfaltbar. Die zusammengeknickten Lagen der Folie sind insbesondere zumindest im Wesentlichen deckungsgleich zueinander. Alternativ kann eine der wenigstens zwei zusammenklappbaren Folienlagen die andere flächenmäßig überragen. Die kleinere Folienlage wird bevorzugt unterhalb der flächenmäßig größeren und vorzugsweise dem Fahrzeugteil zugewandt angeordnet werden, damit sie besser geschützt ist.

Weiter bevorzugt ist die Folie mindestens einseitig beschriftbar. Die Beschriftung kann vorzugsweise zwischen zwei aufeinander befestigbaren Lagen der Folie angeordnet sein. Insbesondere kann die Beschriftung direkt auf der Folie erfolgen. Alternativ kann sie in oder auf eine Beschichtung oder mittels einer zusätzliche Folie oder eines anderen Materials auf- und/oder eingebracht werden. Indem das Beschriften vorzugsweise zwischen den Lagen der Folie erfolgt, wird nach dem Aufeinanderkleben ein Manipulieren der Beschriftung wesentlich erschwert oder sogar verhindert. Die Beschriftung kann aber auch auf einer dem Fahrzeug zugewandten Unterseite der Folie bzw. im Bereich der Klebeschicht angeordnet sein zum Schutz vor Manipulation.

Weiter ist der Datenträger bzw. der Funkchip auf die Folie aufgesetzt. Besonders bevorzugt kann eine Aussparung in der Folie vorgesehen sein, in die der Datenträger einsetzbar ist. Der Funkchip ist zur Verbesserung des Schutzes auf der Seite der Folie mit der Klebeschicht angeordnet, insbesondere in diese eingebettet. Dies ist üblicherweise die dem Fahrzeugteil zugewandte Seite. Besonders bevorzugt ist eine Direktkontaktierung zwischen Antenne und Funkchip vorgesehen. Alternativ oder ergänzend kann eine Kopplung zwischen Antenne und Funkchip auf induktiven und/oder kapazitivem Wege ausgeführt werden. Insbesondere kann eine Kontaktierung mittels Leiterschleifen (loops) und/oder Metallfahnen beziehungsweise Metallflügelchen (straps) und/oder Ähnlichem erfolgen.

Insbesondere ist die Folie und/oder die Beschichtung der Folie und/oder das Hologramm bei Ablösung oder Manipulation mit erkennbaren Merkmalen einer Zerstörung versehen. Dies erfolgt beispielsweise dadurch, dass die Klebeschicht Teile des Hologramms beziehungsweise der Folie oder deren Beschichtung ablöst. Dies kann dadurch erreicht werden, dass die Klebeschicht an einzelnen Flächenbereichen mehr oder weniger stark an der Folie beziehungsweise dem Hologramm haftet. Vorzugsweise ist eine eventuelle Zerstörung damit ohne Hilfsmittel für einen Betrachter visuell erkennbar. Dies ist nämlich vorzugsweise dann der Fall, wenn entsprechende Teilbereiche des Hologramms abgelöst sind. Schließlich wird vorzugsweise die Sende- und/oder Empfangsleistung der Antenne bei einer Ablösung der Klebeschicht und/oder einer Manipulation des Hologramms herabgesetzt. Dies wird durch eine zerstörte Leiterschleife detektiert. Vorzugsweise wird die Manipulation bzw. ein Ablösen der Klebeschicht durch den Datenträger detektiert. Hierzu kann insbesondere eine Sicherungseinrichtung vorgesehen sein, die bei Ablösung bzw. Manipulation des Hologramms zerstört wird. Insbesondere eignet sich dazu beispielsweise eine langgestreckte Leiterschleife, die sich nur äußerst schwer vollständig ohne Zerstörung ablösen lässt. Eine solche Sicherungsvorrichtung wird auch als "Tamper-Alarm" bezeichnet. Damit kann auch auf technischem Wege beim Auslesen ohne Schwierigkeiten eine Manipulation erkannt werden. Der Datenträger reduziert dabei die Sendeleistung vorzugsweise um wenigstens 30%, vorzugsweise 50%, besonders bevorzugt um wenigstens 70% gegenüber dem Leistung ohne Manipulation. Damit stellt eine reduzierte Sende- und/oder Empfangsleistung ein Indiz für eine Manipulation da.

Bevorzugte Ausführungsbeispiele der Erfindung werden im Folgenden anhand der Zeichnung näher erläutert. In dieser zeigen:
- Fig. 1: ein erfindungsgemäßes Fahrzeugidentifikationsmittel mit einem Hologramm,
- Fig. 2: ein weiteres erfindungsgemäßes Fahrzeugidentifikationsmittel mit zwei Datenträgern und zwei Antennen,
- Fig. 3: ein erfindungsgemäßen Fahrzeugidentifikationsmittel mit zwei Datenträgern, zwei Antennen, einer zusätzlichen Sicherungsvorrichtung und einem Hologramm, und
- Fig. 4: einen Schnitt durch ein erfindungsgemäßes Fahrzeugidentifikationsmittel im Bereich eines Datenträgers und Schlitzes.

Ein erfindungsgemäßes Fahrzeugidentifikationsmittel 10 oder auch Fahrzeugkennzeichen besteht aus einem flächigen Material, wie beispielsweise einer Folie 12. Im vorliegenden Fall handelt es sich um im Wesentlichen rechteckige Ausführungsbeispiele des Fahrzeugidentifikationsmittel 10. Es sind aber auch nahezu beliebige andere (äußere) geometrische Formen der Folie beziehungsweise einer Beschichtung oder eines Aufdrucks der Folie möglich. Dies hängt insbesondere von den lokalen, regionalen oder nationalen Gegebenheiten wie entsprechenden gesetzlichen oder anderen Regelungen ab, die entsprechende Fahrzeugidentifikationsmittel 10 und deren Ausgestaltung vorschreiben.

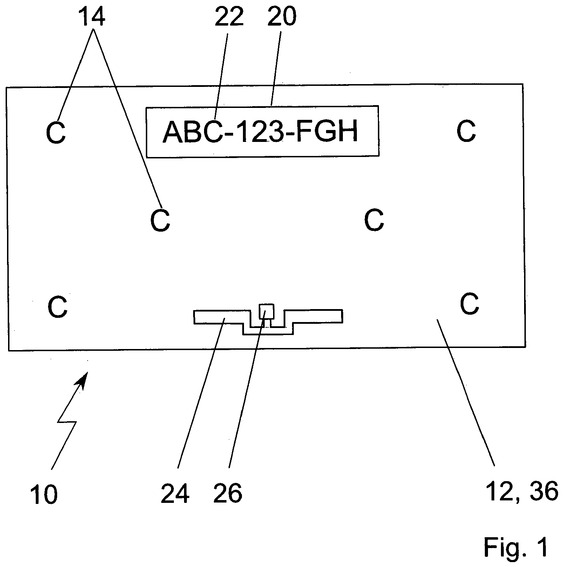

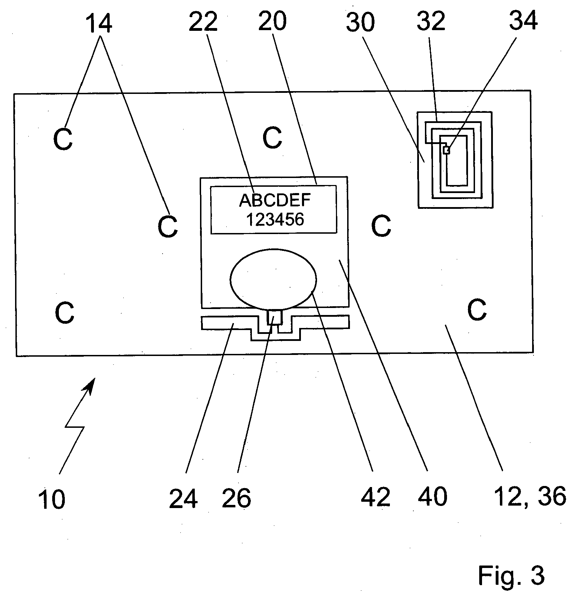

Das in den Fig. 1 und 3 gezeigte Fahrzeugidentifikationsmittel 10 ist im Bereich der Folie 12 mit einem Hologramm 36 ausgestattet. Exemplarisch ist hier eine Reihe von Hologrammsymbolen 14 dargestellt, die lediglich den Aufbau beziehungsweise die Gestaltung des Fahrzeugidentifikationsmittels 10 veranschaulichen sollen. Die dargestellten Hologrammsymbole 14 sind keineswegs in der gezeigten Form und Anzahl festgelegt, sondern können praktisch in beliebiger Form und Zahl, insbesondere auch flächendeckend vorliegen. Bei dem Hologramm 36 handelt es sich im vorliegenden Fall um ein sogenanntes Prägehologramm. Dies bedeutet, dass vorzugsweise mit einer Stempel- oder Walzentechnik Vertiefungen in eine Beschichtung 16 der Folie 12 eingebracht werden. Diese Beschichtung 16 ist beispielsweise als metallische Schicht ausgebildet. Die eingeprägten Hologrammsymbole 14 werden bei Lichteinfall mit entsprechenden farbig schillernden und dreidimensionalen Effekten sichtbar. Alternativ können beispielsweise auch lasergeschriebene Hologramme vorgesehen sein.

Das Fahrzeugidentifikationsmittel 10 verfügt über ein Beschriftungsfeld 20. In diesem Beschriftungsfeld 20 ist eine Beschriftung 22 vorgesehen, die zur Identifizierung dient. Die Beschriftung 22 des Kennzeichens 10 kann beispielsweise durch Bedrucken, Bekleben, Ausstanzen oder Prägen angebracht werden. Die Beschriftung 22 selber ist selbstverständlich nicht auf die hier gezeigten Buchstaben und Zahlen beschränkt. Sie kann jede Art von Beschriftung und Kombination von Zeichen oder Ähnlichem, einschließlich bildlicher Darstellungen enthalten. Häufig wird jedoch an dieser Stelle insbesondere zumindest das amtliche Kennzeichen beziehungsweise die Nummer auf dem Nummernschildern zur Identifikation des Fahrzeugs vorgesehen werden.

Das Fahrzeugidentifikationsmittel 10 weist außerdem wenigstens einen sogenannten Transponder auf, der aus einem Datenträger 26 und einer Antenne gebildet ist. Als Antenne dient im vorliegenden Fall eine sogenannte Schlitzantenne. Eine Schlitzantenne ist entsprechend als Ausnehmung in Form eines Schlitzes 24 in einem elektrisch leitfähigen Material ausgebildet ist. Das elektrisch leitfähige Material stellt hier die Folie 12 mit einer elektrisch leitfähigen Beschichtung 16 dar. Die Beschichtung 16 ist hier eine Metallschicht. Eine Schlitzantenne funktioniert aufgrund einer entsprechenden Unterbrechung im elektrischen leitfähigen Material auf ähnliche Weise wie eine übliche DipolAntenne. Lediglich die magnetischen und elektrischen Feldkomponenten sind vertauscht. Die konkrete Ausbildung des Schlitzes 24 im vorliegenden Fall ist ein U-förmiger Verlauf mit Seitenarmen. Die Schlitzform dient zur optimierten Ankopplung des Datenträgers 26, der als Funkchip bzw. RFID-Chip (Radio Frequency Identification Device) ausgebildet ist. Dementsprechend kann durch Einstrahlung elektromagnetischer Wellen über die Antenne aus Folie 12 und Schlitz 24 der Datenträger 26 mit elektrischer Energie versorgt werden. Der Datenträger 26 ist dann in der Lage, die auf ihm gespeicherten Daten per Funk über die Schlitzantenne wieder abzusenden.

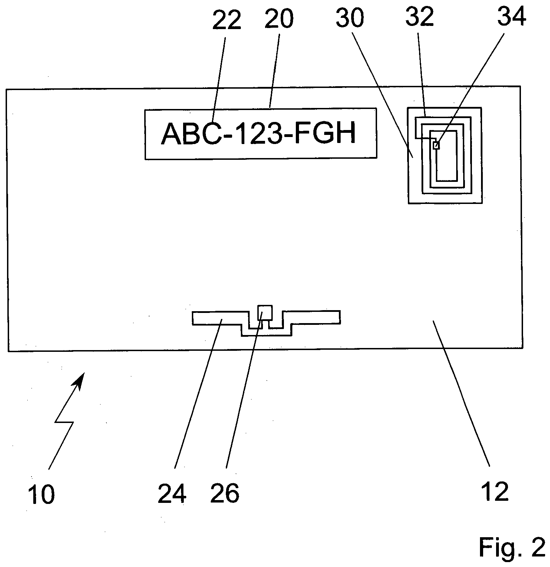

Bei dem in Fig. 2 gezeigten weiteren Ausführungsbeispiel ist eine weitere Ausnehmung 30 in dem elektrisch leitfähigen Bereich der Folie 12 vorgesehen. Innerhalb dieser hier rechteckigen Ausnehmung ist eine Antennenspule 32 aus elektrisch leitfähigem Material vorgesehen. Die Spule 32 ist dabei ebenfalls aus dem Material der Beschichtung 16 gebildet. Die Antennenspule 32 ist ebenfalls mit einem Datenträger 34 als Funkchip gekoppelt.

Bereits anhand der Dimensionen der beiden unterschiedlichen Antennen ist erkennbar, dass die beiden Datenträger 26 und 34 in unterschiedlichen Frequenzbereichen arbeiten. Der Funkchip 34 funktioniert dabei typischerweise im HF- oder Hochfrequenzbereich, während der Funkchip 26 im sogenannten UHF- oder Ultrahochfrequenzbereich arbeitet. Damit sind auch entsprechend unterschiedliche Auslesedistanzen verbunden. Der HF-Chip 34 ist im Bereich von einigen Zentimetern bis Dezimetern auslesbar, als sogenannte Nahfeldkommunikation oder Near Field Communication (NFC). Der UHF-Funkchip 26 dagegen kann typischerweise auch noch aus einer Entfernung von einigen Metern bis hin zu wenigen zehn Metern ausgelesen werden. Ein Auslesen des HF-Chips 34 erfolgt auch typischerweise durch ein Handlesegerät, wie beispielsweise einem geeigneten Mobiltelefon mit integriertem NFC-Lesegerät. Ein Auslesen des UHF-Chips 26 kann dagegen beispielsweise unter anderem durch fest installierte Lesegeräte im Bereich von Brücken oder allgemein an Straßen insbesondere auch bei sich bewegenden Fahrzeugen erfolgen.

Das Ausführungsbeispiel der Fig. 2 zeigt gerade keine holografische Struktur im Bereich der Folie 12. Die Folie 12 ist zwar leitfähig ausgebildet, muss jedoch nicht als Hologramm 36 ausgebildet sein. Dies gilt grundsätzlich auch für die übrigen Ausführungsbeispiele entsprechend.

In einem dritten Ausführungsbeispiel gemäß Fig. 3 sind die oben genannten Merkmale im Wesentlichen miteinander kombiniert. Zum einen handelt es sich um ein holografisches Material der Folie 12, auf dem dementsprechend Hologrammsymbole 14 gezeigt sind. Es sind außerdem zwei separate Datenträger 26 und 34 mit der entsprechenden Schlitzantenne mit dem Schlitz 24 bzw. der Antennenspule 32 vorgesehen. Schließlich ist das Beschriftungsfeld 20 mit der Beschriftung 22 hier exemplarisch im Bereich der Aussparung 40 angeordnet statt auf dem Hologramm 36. Es ist aber auch ohne weiteres eine andere Anordnung denkbar.

Darüber hinaus ist eine weitere Aussparung 40 in einem zentralen Bereich des Fahrzeugkennzeichens 10 ausgebildet. Darin ist eine ovalförmige Leiterschleife 42 ausgebildet, die im in der Zeichnung unteren Bereich eine Unterbrechung aufweist. Im Bereich dieser Unterbrechung ist sie mit beiden Enden separat mit dem Datenträger 26 kontaktiert. Dies erfolgt derart, dass der Datenträger 26 feststellen kann, ob die Leiterschleife 42 eine geschlossene leitende Verbindung herstellt oder eine Unterbrechung aufweist. Sollte die Leiterschleife 42 beispielsweise durch unsachgemäße Handhabung zum Beispiel im Rahmen eines Manipulationsversuches oder einer unberechtigten Ablösung des Fahrzeugidentifikationsmittels 10 von einem Untergrund zerstört worden sein, wird dies durch den Datenträger 26 detektiert. Dieser sogenannte "Tamper-Alarm" sorgt dann beispielsweise dafür, dass der Chip 26 die Sendeleistung erkennbar ändert, insbesondere deutlich reduziert oder sogar ganz abschaltet. Auf diese Weise ist dann beim elektronischen Auslesen des Datenträgers 26 auf einfache Weise feststellbar, ob ein Manipulationsversuch stattgefunden hat.

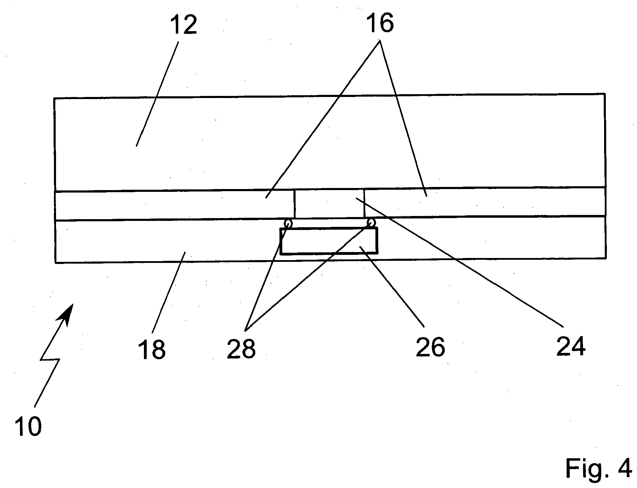

Die Folie 12, wie sie als Schnittbild in Fig. 4 dargestellt ist, bildet das Trägermaterial des Fahrzeugidentifikationsmittels 10. Auf diese ist eine Beschichtung 16 aus einem metallischen Material aufgebracht. Im Bereich des Schlitzes 24 ist dieses Material der Beschichtung 16 gerade unterbrochen, so dass damit auch die Leitfähigkeit lokal in diesem Bereich verschwindet. Der Datenträger 26 kann dann wie dargestellt auf den Schlitz beziehungsweise entsprechende Kontaktflächen der Beschichtung 16 aufgesetzt werden. Dabei sind beide seitlich des Schlitzes befindlichen Abschnitte der Beschichtung mit jeweils einem Kontakt des Datenträgers 26 verbunden.

Zur Kontaktierung des Datenträgers 26 mit der Beschichtung 16 sind Kontakte 28 vorgesehen. Dazu kann beispielsweise üblicherweise Lot oder Lötzinn Verwendung finden. Im vorliegenden Fall ist jedoch eine wirtschaftlichere und weniger störungsanfällige Kontaktierung vorgesehen. Hierzu ist zunächst ein Klebstoff zum Festkleben des Datenträgers 26 und als Kontaktmaterial 28 vorgesehen. Damit wird erreicht, dass der Chip 26 bereits fest mit dem Fahrzeugkennzeichen 10 verbunden ist. Zur elektrischen Kontaktierung kann beispielsweise auf den Kleber beim Aufsetzen Druck ausgeübt werden, wenn dieser im Inneren lose verteilte leitfähige Partikel enthält. Während diese Partikel im unbelasteten Zustand ausreichenden Abstand voneinander aufweisen, werden sie bei einer Druckbeaufschlagung aufeinandergepresst und führen so zu einer elektrischen Kontaktierung des Funkchips 26 mit der Beschichtung 18. Der Kleber fixiert dann den Datenträger 26 in diesem kontaktierten Zustand. Alternativ kann auch eine Kontaktierung durch einen Kleber oder ein ähnliches Material erfolgen, das durch Erhitzen beispielsweise eine Agglomeration enthaltener Teilchen hervorruft. Durch eine Ansammlung und gegebenenfalls Verschmelzung wird dann eine leitfähige Verbindung zwischen den Kontakten des Datenträgers 26 und der Beschichtung 18 aufgebaut. Ein Erhitzen kann durch direkte Wärmezufuhr beispielsweise mit einem Lötwerkzeug erfolgen oder auch auf anderem Wege, beispielsweise durch Reibschweißen oder Ultraschalllöten.

Alternativ oder ergänzend kann ein Einkoppeln der Sendeleistung in die Antenne mittels wenigstens einer Spule, einer Windung, einer Leiterschleife und/oder wenigstens einer Platte, einer Metallfahne, einem Metallflügelchen oder Ähnlichem erfolgen. Diese sind hierzu zumindest mit dem Funkchip 26 leitfähig verbunden. Dies dient insbesondere zur induktiven oder kapazitiven, alternativ auch galvanischen, Einkopplung in die Antenne.

Zur Anbringung des Fahrzeugkennzeichens 10 an einem nicht dargestellten Fahrzeug ist eine Klebeschicht 18 vorgesehen. Diese Klebeschicht 18 ist im vorliegenden Fall direkt auf die Beschichtung 16 aufgebracht, so dass gleichzeitig ein mechanischer Schutz derselben durch die außen liegende Folie 12 erfolgt. Das Fahrzeugidentifikationsmittel 10 wird dann mit der Klebeschicht 18 am Fahrzeug angebracht. Als drittes Fahrzeugkennzeichen 10 kann es beispielsweise an einer (Fenster-)Scheibe, wie einer Windschutzscheibe, angebracht werden, insbesondere im Innern des Fahrzeugs.

Der für die Klebeschicht 18 verwendete Klebstoff kann vorzugsweise ein aushärtender Klebstoff sein, der beispielsweise durch Einwirkung ultravioletten Lichts aushärtet, beispielsweise durch Sonnenlicht. Nach dem Aushärten lässt sich der Klebstoff nur noch sehr schwer vom Untergrund lösen. Ebenfalls haften Teile der Beschichtung 16 an dem Klebstoff der Klebeschicht 18. Damit kann auf einfache Weise visuell festgestellt werden, ob eine Manipulation durch Ablösen des bereits verklebten Fahrzeugidentifikationsmittels 10 erfolgt ist. Hierzu sind insbesondere einzelne Bereiche der Beschichtung stärker mit der Klebeschicht 18 und andere Bereiche stärker mit der Folie 12 verbunden. Somit kommt es zu einem Auseinanderreißen der Beschichtung 18 einerseits in an der Folie 12 anhaftende und andererseits am Klebstoff anhaftende Teile. So erfolgt eine visuell sichtbare Zerstörung der Beschichtung 18. Da es sich bei der Beschichtung 18 vorzugsweise um das Hologramm 36 handelt, wird dieses dabei sichtbar zerstört.

Alternativ oder zusätzlich kann die Folie 12 noch zusammenklappbar beziehungsweise faltbar sein, was hier nicht gezeigt ist. Dann liegt eine Schicht der Folie 12 oberhalb und eine Schicht der Folie 12 unterhalb. Die Beschichtung 16 wie auch der Funkchip 26 sind dann zwischen den Folienlagen im Inneren eingeschlossen. Des Weiteren befindet sich dann auch eine eventuelle Beschriftung 22 zwischen diesen Lagen der Folie 12.

Insbesondere kann auch eine Reflexfolie zur Reflexion von Licht als Antenne ausgebildet sein. Die Reflexfolie weist typischerweise eine elektrisch leitfähige Schicht auf beziehungsweise wird durch sie gebildet. Daher eignet sie sich als Antennenmaterial. Die Reflexfolie ist typischerweise unterhalb der Hologrammschicht angeordnet, um insbesondere nicht durch eine Bedruckung abgeschattetes Licht zu reflektieren.

Das hier beschriebene Fahrzeugidentifikationsmittel ist vorzugsweise ein Fahrzeugkennzeichen, vorzugsweise ein Kraftfahrzeugkennzeichen. Es handelt sich insbesondere um ein sogenanntes "drittes Kennzeichen", das zusätzlich zu den "Nummernschildern" an einem (Kraft-)Fahrzeug angebracht ist. Vorzugsweise ist das Fahrzeugkennzeichen an einer Scheibe des Fahrzeugs befestigt, insbesondere an der Windschutzscheibe, vorzugsweise innenliegend. Neben der Identifikation des Fahrzeugs beziehungsweise des Halters können auch weitere Daten, wie beispielsweise Steuerdaten oder Maut-Gebühren anhand dieses Identifikationsmittels ermittelt beziehungsweise nachgewiesen werden.

### Bezugszeichenliste

- 10: Fahrzeugidentifikationsmittel
- 12: Folie
- 14: Hologrammsymbol
- 16: Beschichtung
- 18: Klebeschicht
- 20: Beschriftungsfeld
- 22: Beschriftung
- 24: Schlitz
- 26: Datenträger
- 28: Kontaktmaterial
- 30: Aussparung
- 32: Antennenspule
- 34: Datenträger
- 36: Hologramm
- 40: Aussparung
- 42: Leiterschleife

## Patentansprüche

1. Fahrzeugidentifikationsmittel, vorzugsweise Fahrzeugkennzeichen, mit einer zumindest teilweise elektrisch leitfähigen Folie (12), die zumindest teilweise als Hologramm (36) und/oder als Reflexfolie ausgebildet ist, einem berührungslos auslesbaren Datenträger (26), insbesondere einem Funkchip, und einer Antenne für den Datenträger (26), welche als Schlitzantenne ausgebildet ist, **dadurch gekennzeichnet, dass** die Folie (12) als selbstklebende Folie (12) ausgebildet ist, und dass die Antenne für den Datenträger (26) als eine Aussparung in dem Hologramm (36) und/oder der Reflexfolie der selbstklebenden Folie (12) ausgebildet ist, wobei der Datenträger (26) auf das Hologramm (36) und/oder die Reflexfolie geklebt ist und eine Spule aufweist mit welcher der Datenträger (26) induktiv und/oder kapazitiv an die Schlitzantenne koppelbar ist.

2. Fahrzeugidentifikationsmittel nach Anspruch 1, **dadurch gekennzeichnet, dass** der Datenträger (26) in mehreren Frequenzbereichen unabhängig voneinander auslesbar ist, wobei vorzugsweise für jeden der Frequenzbereiche eine Antenne zum separaten Auslesen ausgebildet ist.

3. Fahrzeugidentifikationsmittel nach einem Anspruch 1 oder 2, **dadurch gekennzeichnet, dass** die Folie (12) zumindest teilweise als reflektives Hologramm (36) ausgebildet ist und/oder dass die Folie (12) beziehungsweise das Hologramm (36) als Prägehologramm ausgebildet ist.

4. Fahrzeugidentifikationsmittel nach einem der vorhergehenden Ansprüche, **dadurch gekennzeichnet, dass** die Folie (12) eine metallische Beschichtung (16), insbesondere Bedampfung, aufweist zur Erzeugung der Leitfähigkeit und die Beschichtung (16) Bereiche aufweist, in denen elektrische Leitfähigkeit herabgesetzt oder unterbrochen ist, insbesondere in Form eines Schlitzes (24), um vorzugsweise wenigstens eine Antennenstruktur für die Antenne, insbesondere wenigstens eine Schlitzantenne, eine Leiterschleife, eine Plattenantenne oder ähnliches auszubilden.

5. Fahrzeugidentifikationsmittel nach Anspruch 2, **dadurch gekennzeichnet, dass** eine der Antennen in einer Aussparung (30) einer anderen Antenne ausgebildet ist.

6. Fahrzeugidentifikationsmittel nach Anspruch 2, **dadurch gekennzeichnet,** wenigstens eine Antenne als Nahfeldantenne und/oder wenigstens einer Antenne als Fernfeldantenne ausgebildet ist, wobei vorzugsweise separate Strukturen für jede Antenne vorgesehen sind.

7. Fahrzeugidentifikationsmittel nach einem der vorhergehenden Ansprüche, **dadurch gekennzeichnet, dass** die Folie (12) auf wenigstens einer Seite eine Klebeschicht (18) zur vorzugsweise dauerhaften Befestigung an einem Fahrzeug aufweist, wobei die Klebeschicht (18) vorzugsweise auf Seite der reflektierenden beziehungsweise elektrisch leitfähigen Beschichtung (16) aufgebracht ist.

8. Fahrzeugidentifikationsmittel nach einem der vorhergehenden Ansprüche, **dadurch gekennzeichnet, dass** die Folie (12) wenigstens eine Klebeschicht (18) zum vorzugsweise dauerhaften Aufeinanderkleben wenigstens zweier Lagen der Folie (12) aufweist, wobei die Folie (12) bevorzugt an einer vorherbestimmten Knickstelle zusammenfaltbar ist.

9. Fahrzeugidentifikationsmittel nach einem der vorhergehenden Ansprüche, **dadurch gekennzeichnet, dass** die Folie (12) zumindest einseitig beschriftbar ist, insbesondere zwischen zwei aufeinander befestigbaren Lagen der Folie (12) zum Schutz vor Manipulationen.

10. Fahrzeugidentifikationsmittel nach einem der vorhergehenden Ansprüche, **dadurch gekennzeichnet, dass** der Datenträger (26) beziehungsweise der Funkchip auf die Folie aufgesetzt ist, oder in eine Aussparung der Folie (12) eingesetzt ist, wobei der Funkchip vorzugsweise auf der Seite der Folie (12) mit der Klebeschicht (18) angeordnet ist.

11. Fahrzeugidentifikationsmittel nach einem der vorhergehenden Ansprüche, **dadurch gekennzeichnet, dass** die Folie (12) und/oder die Beschichtung der Folie (12) und/oder das Hologramm (36) bei Ablösung oder Manipulation der wenigstens einen verklebten Klebeschicht (18) Merkmale einer Zerstörung aufweist, die vorzugsweise ohne Hilfsmittel für einen Betrachter visuell erkennbar sind.

12. Fahrzeugidentifikationsmittel nach einem der vorhergehenden Ansprüche, **dadurch gekennzeichnet, dass** die Sende- und/oder Empfangsleistung der Antenne nach einer Ablösung der Klebeschicht (18) oder einer Manipulation des Hologramms (36) herabgesetzt ist, wobei vorzugsweise eine leicht zerstörbare Sicherung vorgesehen ist, insbesondere eine Leiterschleife (42).

## Claims

1. A vehicle identification means, preferably a vehicle identification, having an at least partially electrically conductive film (12) which is at least partially implemented as a hologram (36) and/or as a reflective film, a data carrier (26) which can be read out in a contactless manner, in particular a radio chip, and an antenna for the data carrier (26), which is implemented as a slot antenna, **characterized in that** the film (12) is implemented as a self-adhesive film (12), and that the antenna for the data carrier (26) is implemented as an opening in the hologram (36) and/or in the reflective film of the self-adhesive film (12), wherein the data carrier (26) is glued to the hologram (36) and/or the reflective film and has a coil by means of which the data carrier (26) can be coupled to the slot antenna in an inductive and/or capacitive manner.

2. The vehicle identification means according to claim 1, **characterized in that** the data carrier (26) can be read out in multiple frequency ranges independently of one another, wherein an antenna for the separate readout is preferably implemented for each of the frequency ranges.

3. The vehicle identification means according to claim 1 or 2, **characterized in that** the film (12) is at least partially implemented as a reflective hologram (36) and/or that the film (12) or the hologram (36) is implemented as an embossed hologram.

4. The vehicle identification means according to any one of the preceding claims, **characterized in that** the film (12) has a metallic coating (16), in particular vapour deposition, for creating the conductivity and the coating (16) has regions in which electrical conductivity is reduced or interrupted, in particular in the form of a slot (24), in order to preferably implement at least one antenna structure for the antenna, in particular at least one slot antenna, conductor loop, plate antenna, or the like.

5. The vehicle identification means according to claim 2, **characterized in that** one of the antennas is implemented in an opening (30) of another antenna.

6. The vehicle identification means according to claim 2, **characterized in that** at least one antenna is implemented as a near-field antenna and/or at least one antenna is implemented as a far-field antenna, wherein preferably separate structures are provided for each antenna.

7. The vehicle identification means according to any one of the preceding claims, **characterized in that** the film (12) has an adhesive layer (18) on at least one side for the preferably permanent fastening on a vehicle, wherein the adhesive layer (18) is preferably applied on the side of the reflective and/or electrically conductive coating (16).

8. The vehicle identification means according to any one of the preceding claims, **characterized in that** the film (12) has at least one adhesive layer (18) for the preferably permanent gluing of at least two layers of the film (12) to one another, wherein the film (12) can preferably be folded together at a predetermined bending point.

9. The vehicle identification means according to any one of the preceding claims, **characterized in that** the film (12) can be inscribed on at least one side, in particular between two layers of the film (12) which can be fastened on one another to protect from manipulations.

10. The vehicle identification means according to any one of the preceding claims, **characterized in that** the data carrier (26) or the radio chip is placed on the film, or is inserted into an opening of the film (12), wherein the radio chip is preferably arranged on the side of the film (12) having the adhesive layer (18).

11. The vehicle identification means according to any one of the preceding claims, **characterized in that** the film (12) and/or the coating of the film (12) and/or the hologram (36) has features of destruction, which are preferably visually recognizable to an observer without aids, in the event of detachment or manipulation of the at least one glued adhesive layer (18).

12. The vehicle identification means according to any one of the preceding claims, **characterized in that** the transmitting and/or receiving power of the antenna is reduced after a detachment of the adhesive layer (18) or a manipulation of the hologram (36), wherein an easily destructible safeguard is preferably provided, in particular a conductor loop (42).

## Revendications

1. Moyen d'identification de véhicule, de préférence immatriculation de véhicule, comprenant un film (12) au moins partiellement électriquement conducteur, qui est au moins partiellement réalisé sous la forme d'un hologramme (36) et/ou d'un film réfléchissant, un support de données (26) lisible sans contact, notamment une puce radioélectrique, et une antenne pour le support de données (26), laquelle est réalisée sous la forme d'une antenne à fente, **caractérisé en ce que** le film (12) est réalisé sous la forme d'un film autocollant (12) et **en ce que** l'antenne pour le support de données (26) est réalisée sous la forme d'une découpe dans l'hologramme (36) et/ou le film réfléchissant du film autocollant (12), le support de données (26) étant collé sur l'hologramme (36) et/ou le film réfléchissant et possédant une bobine avec laquelle le support de données (26) peut être couplé de manière inductive et/ou capacitive avec l'antenne à fente.

2. Moyen d'identification de véhicule selon la revendication 1, **caractérisé en ce que** le support de données (26) peut être lu dans plusieurs plages de fréquences indépendantes les unes des autres, une antenne pour une lecture séparée étant de préférence formée pour chacune des plages de fréquences.

3. Moyen d'identification de véhicule selon la revendication 1 ou 2, **caractérisé en ce que** le film (12) est au moins partiellement réalisé sous la forme d'un hologramme réfléchissant (36) et/ou **en ce que** le film (12) ou l'hologramme (36) est réalisé sous la forme d'un hologramme estampé.

4. Moyen d'identification de véhicule selon l'une des revendications précédentes, **caractérisé en ce que** le film (12) possède un revêtement métallique (16), notamment en phase vapeur, en vue de produire la conductivité et le revêtement (16) possède des zones dans lesquelles la conductivité électrique est réduite ou interrompue, notamment sous la forme d'une fente (24), en vue de former de préférence au moins une structure d'antenne pour l'antenne, notamment au moins une antenne à fente, une boucle conductrice, une antenne plaque ou similaire.

5. Moyen d'identification de véhicule selon la revendication 2, **caractérisé en ce que** l'une des antennes est formée dans une découpe (30) d'une autre antenne.

6. Moyen d'identification de véhicule selon la revendication 2, **caractérisé en ce qu'**au moins une antenne est réalisée sous la forme d'une antenne de champ proche et/ou au moins une antenne sous la forme d'une antenne de champ lointain, des structures séparées étant de préférence prévues pour chaque antenne.

7. Moyen d'identification de véhicule selon l'une des revendications précédentes, **caractérisé en ce que** le film (12) possède sur au moins un côté une couche adhésive (18) servant à la fixation de préférence permanente sur un véhicule, la couche adhésive (18) étant de préférence appliquée sur le côté du revêtement (16) réfléchissant ou électriquement conducteur.

8. Moyen d'identification de véhicule selon l'une des revendications précédentes, **caractérisé en ce que** le film (12) possède au moins une couche adhésive (18) servant au collage de préférence permanent d'au moins deux couches du film (12) l'une sur l'autre, le film (12) pouvant de préférence être plié au niveau d'un faux-pli préalablement défini.

9. Moyen d'identification de véhicule selon l'une des revendications précédentes, **caractérisé en ce que** le film (12) peut recevoir une inscription au moins d'un côté, notamment entre deux couches pouvant être fixées l'une sur l'autre du film (12) en vue d'une protection contre les manipulations.

10. Moyen d'identification de véhicule selon l'une des revendications précédentes, **caractérisé en ce que** le support de données (26) ou la puce radioélectrique est posé sur le film, ou inséré dans une découpe du film (12), la puce radioélectrique étant de préférence disposée sur le côté du film (12) muni de la couche adhésive (18).

11. Moyen d'identification de véhicule selon l'une des revendications précédentes, **caractérisé en ce que** le film (12) et/ou le revêtement du film (12) et/ou l'hologramme (36), en cas de décollement ou de manipulation de l'au moins une couche adhésive (18) collée, présente des caractéristiques d'une détérioration qui sont reconnaissables visuellement de préférence sans moyens auxiliaires pour un observateur.

12. Moyen d'identification de véhicule selon l'une des revendications précédentes, **caractérisé en ce que** la puissance d'émission et/ou de réception de l'antenne est réduite après un décollement de la couche adhésive (18) ou une manipulation de l'hologramme (36), une sécurité facilement détériorable étant de préférence prévue, notamment une boucle conductrice (42).
